Europäisches Patentamt

European Patent Office

Office européen des brevets

(19)

(11) Veröffentlichungsnummer : **0 066 893**
**B1**

# (12) EUROPÄISCHE PATENTSCHRIFT

(45) Veröffentlichungstag der Patentschrift :
**10.09.86**

(21) Anmeldenummer : **82105061.4**

(22) Anmeldetag : **09.06.82**

(51) Int. Cl.⁴ : **F 16 B 12/26**

(54) **Verbindungsbeschlag zum lösbaren Verbinden zweier plattenförmiger Möbelteile.**

(30) Priorität : **10.06.81 DE 3122978**

(43) Veröffentlichungstag der Anmeldung :
**15.12.82 Patentblatt 82/50**

(45) Bekanntmachung des Hinweises auf die Patenterteilung : **10.09.86 Patentblatt 86/37**

(84) Benannte Vertragsstaaten :
**AT DE FR GB IT**

(56) Entgegenhaltungen :
**DE-A- 2 206 684**
**DE-B-   21 336**
**DE-C-   620 937**
**DE-U- 7 047 932**
**DE-U- 7 414 247**
**US-A- 4 186 976**

(73) Patentinhaber : **Arturo Salice S.p.A.**
**Via Provinciale Novedratese 10**
**I-22060 Novedrate (Como) (IT)**

(72) Erfinder : **Der Erfinder hat auf seine Nennung verzichtet**

(74) Vertreter : **Lorenz, Eduard et al**
**Rechtsanwälte Lorenz, Eduard - Seidler, Bernhard**
**Seidler, Margrit - Gossel, Hans-K. Philipps, Ina, Dr.**
**Widenmayerstrasse 23**
**D-8000 München 22 (DE)**

**Beschreibung**

Die Erfindung betrifft einen Verbindungsbeschlag zum lösbaren Verbinden zweier winkelig, vorzugsweise rechtwinkelig, aufeinanderstoßender Möbelteile nach dem Oberbegriff des Patentanspruchs 1.

Bei einem aus DE-A-22 06 684 bekannten Verbindungsbeschlag dieser Art greift ein federbelasteter Keil oder Drehkeil spannend hinter den verbreiterten Kopf des aus einem Stift bestehenden Gegenbeschlagteils ein. Beschrieben ist ein Keil, der vor dem Einschub des Stifts in einer aus der Einschuböffnung zurückgeschobenen Stellung auf einem durch eine Stufe des Gehäuses gebildeten Anschlag abgestützt und mit einem in dieser Stellung in der Einschuböffnung liegenden Stegteil versehen ist, gegen das der Kopf des Stifts beim Einschub stößt und dadurch zur Lösung der Verrastung den Keil von seinem Anschlag abschiebt. Dieser bekannte Verbindungsbeschlag weist einen komplizierten Aufbau und den Nachteil auf, daß er sich bei einer eventuell erforderlich werdenden Demontage von Möbeln nur schwer wieder lösen läßt. Weiterhin ist die verrastete Montagestellung des Keils nicht genügend gesichert, so daß es zu einem unbeabsichtigten Lösen der Verrastung und einem Vorschnellen des Keils mit der damit verbundenen Verletzungsgefahr kommen kann. Über die Konstruktion bei Verwendung eines Drehkeils, was in der Druckschrift als Möglichkeit aufgezeigt ist, sind in dieser keine Einzelheiten angegeben.

Aus DE-U-70 47 932 ist ein Verbindungsbeschlag zum lösbaren Verbinden zweier winkelig aufeinanderstoßender Möbelteile bekannt, der aus einem zweiarmigen klinkenartigen, von einer Feder belasteten Verriegelungshebel, dessen einer Arm ein hakenförmiges Sperrteil trägt und dessen anderer Arm als Öffnungstaste ausgebildet ist, und aus einem mit einer Halteraste versehenen Bolzen besteht, der einen abgerundeten Kopf aufweist, so daß beim Einschieben des mit dem hakenförmigen Sperrteil versehenen Klinkenarms dieser mit einer abgeschrägten Stirnkante über den Kopf gleitet, bis das Sperrteil in die Halteraste einschnappt. Bei diesem bekannten Verbindungsbeschlag greift das hakenförmige Sperrteil der Klinke mit Spiel in die Halteraste ein und stützt sich auf deren Grund ab, so daß wegen des sich daraus ergebenden Spiels ein Wackeln der miteinander verbunden Möbelteile nicht auszuschließen ist. Eine selbstspannende Wirkung läßt sich mit dem bekannten Verbindungsbeschlag nicht erreichen, vielmehr muß wegen unvermeidbarer Fertigungstoleranzen das hakenförmige Sperrteil der Klinke mit ausreichendem Spiel in die Halteraste eingreifen.

Aufgabe der Erfindung ist es, einen Verbindungsbeschlag der bekannten Art derart zu verbessern, daß er die zu verbindenden Möbelteile bei einfacher Montage spielfrei, also ohne lästiges Wackeln, zusammenhält, wobei eine einfache Demontage zum Zwecke des Umbaus möglich ist.

Erfindungsgemäß wird diese Aufgabe durch die in dem kennzeichnenden Teil des Patentanspruchs 1 angegebenen Merkmale gelöst.

Bei dem erfindungsgemäßen Verbindungsbeschlag muß das Verriegelungsteil zu seiner Montage nicht erst in eine vorgespannte, verrastete Stellung gebracht werden, aus der es von dem eingeschobenen zapfenförmigen Beschlagteil gelöst wird. Wird zum Zwecke der Montage das mit dem verbreiterten Kopf versehene Verbindungsbeschlagteil in das andere eingeschoben, gleitet der kopf auf dem abgeschrägten Teil des hakenförmigen Endteils des Verriegelungshebels unter Spannung der Feder ab, bis es hinter dem hakenförmigen Endteil in seine Verriegelungsstellung schnappt. Soll der Verbindungsbeschlag beispielsweise bei einem Versetzen oder einem Umbau der Möbel gelöst werden, brauchen lediglich die Verriegelungshebel durch die Entriegelungseinrichtungen zurückgeschwenkt zu werden, so daß ein problemloses Auseinandernehmen gewährleistet ist. Der schwenkbare Verriegelungshebel läßt sich in kleinen Abmessungen herstellen und ist in seinem üblichen, leicht zu montierenden topfförmigen Gehäuse mit seiner Druckfeder untergebracht.

Es ist vorgesehen, daß sich in der verriegelten Stellung, in der die miteinander zu verriegelnden Beschlag- und/oder Möbelteile aufeinanderstoßen, die rückwärtige Flanke des hakenförmigen Endteils spitzwinkelig auf der Rückseite des Kopfes abstützt. Auf diese Weise wird jegliches Spiel zwischen den miteinander verbundenen Beschlagteilen in der Verriegelungsstellung vermieden, weil die rückwärtige Flanke des hakenförmigen Endteils mit spitzem Keilwinkel die Beschlagteile miteinander verspannt.

Die Einrichtung zum Verschwenken des Verriegelungshebels besteht zweckmäßigerweise aus einem im Gehäuse schwenkbar gelagerten Bolzen, der einen an dem Verriegelungshebel angreifenden hebelartigen Nocken und endseitig einen auf der Deckplatte des Gehäuses liegenden Betätigungshebel trägt. Um sicherzustellen, daß der Entriegelungshebel in seiner den Verriegelungshebel entriegelnden Stellung verharrt, kann der Nocken in der entriegelten Stellung eine derartige Winkelstellung zu dem Verriegelungshebel einnehmen, daß er sich selbsthemmend auf diesem abstützt.

Vorteilhafte Ausgestaltungen der Erfindung sind Gegenstand der Ansprüche 2 bis 9.

Ein Ausführungsbeispiel der Erfindung wird nachstehend anhand der Zeichnung näher erläutert. In dieser zeigt

Figur 1 einen Längsschnitt durch eine erste Ausführungsform eines in seiner Verriegelungsstellung befindlichen Verbindungsbeschlages,

Figur 2 einen Horizontalschnitt durch den Verbindungsbeschlag nach Fig. 1 längs der Linie II-II,

Figur 3 eine perspektivische Ansicht des Verriegelungshebels des Verbindungsbeschlages nach den Fig. 1 und 2,

Figur 4 eine perspektivische Ansicht des Entriegelungshebels des Verbindungsbeschlages nach den Fig. 1 und 2,

Figur 5 eine Seitenansicht von in eine gemeinsame Buchse eingeschraubten zapfenförmigen Beschlagteilen mit verbreiterten Köpfen,

Figur 6 eine Draufsicht auf das mit dem Verriegelungshebel versehene Beschlagteil nach den Fig. 1 und 2,

Figur 7 und 8 Seitenansichten des mittig geteilten Gehäuses des mit dem Verriegelungshebel versehenen Beschlagteils,

Figur 9 eine Draufsicht auf die Gehäusehälften kurz vor ihrem Zusammenfügen, und

Figur 10 eine Vorderansicht der Gehäusehälften nach Fig. 9.

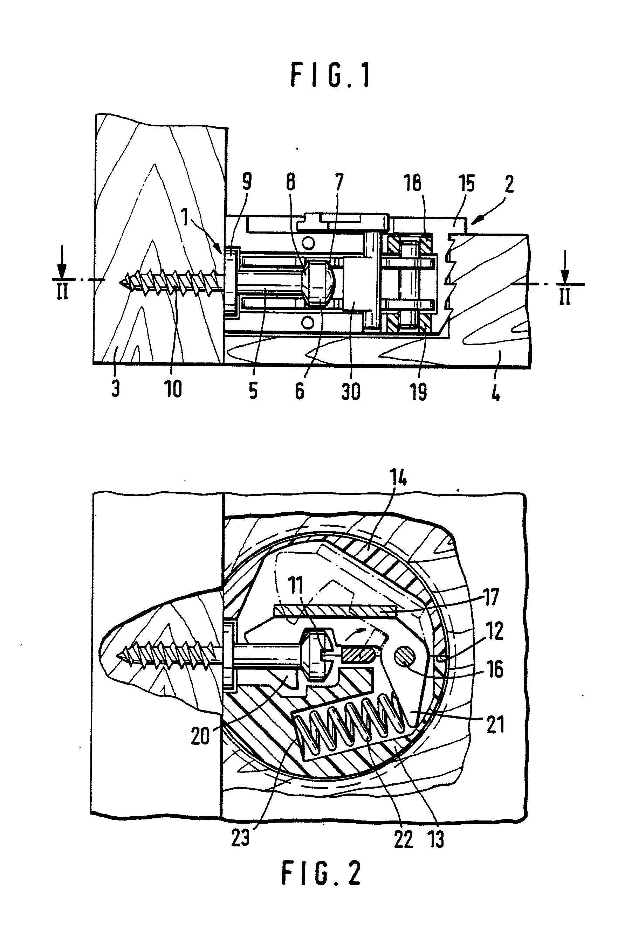

Der in den Fig. 1 bis 10 dargestellte Verbindungsbeschlag besteht aus einem in die vertikale Möbelwand 3 eingeschraubten Beschlagteil 1 und dem in eine ausgefräste Bohrung der waagerechten Möbelwand 4 befestigten gehäuseförmigen Beschlagteil 2.

Das Beschlagteil 1 ist zapfenförmig ausgebildet und besteht aus einem mittleren Schaft 5, der an seinem vorderen Ende einen verbreiterten Kopf 6 trägt. Die Vorderseite 7 des Kopfes 6 ist kugelkalottenförmig ausgebildet. Der Übergang zwischen dem Kopf 6 und dem Schaft 5 ist durch eine kegelstumpfförmige Stufe 8 gebildet. Das hintere Ende des Schaftes 5 ist durch eine ringbundförmige Scheibe 9 begrenzt. Fluchtend mit dem Schaft 5 schließt an die ringbundförmige Scheibe 9 begrenzt. Fluchtend mit dem Schaft 5 schließt an die ringbundförmige Scheibe 9 ein mit einem selbstschneidenden Gewinde versehenes Einschraubteil 10 an.

Der Kopf 6 des Beschlagteils 1 ist mit einem Schlitz 11 für einen Schraubenzieher versehen.

Das Beschlagteil 2 besteht aus einem längs seiner axialen Mittelebene 12 in die Gehäusehälften 13, 14 geteilten zylindrischen Gehäuse mit oberem umlaufenden Flansch 15. In dem Gehäuse 13, 14 ist der um den Gelenkbolzen 16 schwenkbare Verriegelungshebel 17 gelagert. Der Gelenkbolzen 16 schwenkbare Verriegelungshebel 17 gelagert. Der Gelenkbolzen 16 kann drehfest mit dem Verriegelungshebel 17 verbunden sein, wobei die endseitigen Stummel des Gelenkbolzens 16 in Lagerschalen bildende Ausnehmungen 18, 19 des Gehäuses gehalten sind.

Der Verriegelungshebel 17 ist zweiarmig ausgebildet, wobei ein Arm einen hakenförmigen Endteil 20 trägt und an dem anderen Arm 21 die Druckfeder 22 angreift, die zwischen diesem und einer gehäusefesten Widerlagerfläche 23 eingespannt ist.

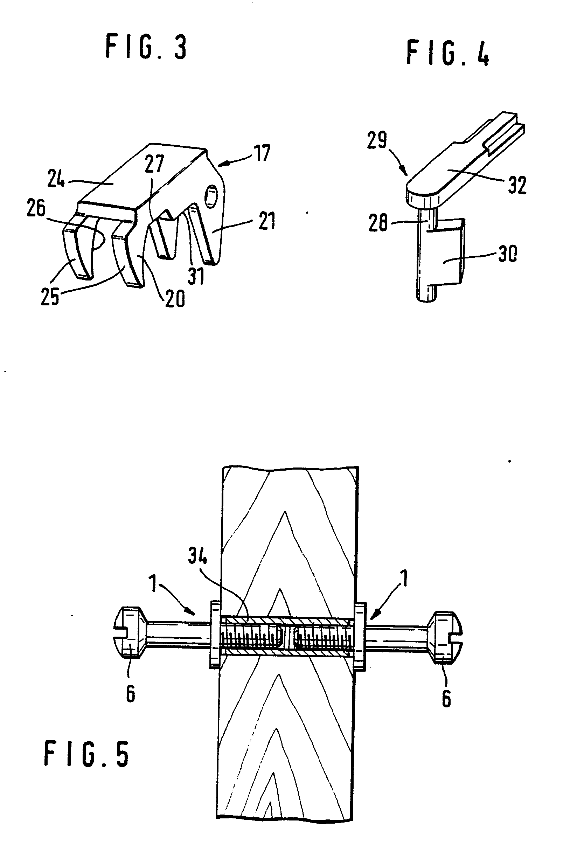

Wie aus Fig. 3 ersichtlich ist, besteht der Verriegelungshebel 17 aus einem Blechstanzteil, von dessen mittlerem Stegteil 24 U-förmig Schenkel abgebogen sind, deren vorderen Teile 2 gegabelte hakenförmige Endteile 20 bilden. Die Vorderseiten 25 der hakenförmigen Endteile 20 sind kurvenförmig abgeschrägt. Die hinteren Flanken 26 der hakenförmigen Endteile 20 weisen ebenfalls eine kurvenförmige Abschrägung auf. Die hinteren Enden der U-förmig abgewinkelten Schenkel bilden den zweiten Hebelarm 21, an dem die Druckfeder 22 angreift.

Angrenzend an die hakenförmigen Endteile 20 sind die U-förmig abgewinkelten Schenkel mit den Grund der zahnförmigen Endteile bildenden Ausnehmungen 27 versehen, in denen im verriegelten Zustand der verbreiterte Kopf 6 des Beschlagteils 1 liegt, ohne sich auf diesem abzustützen.

Parallel zu dem Schwenkbolzen 16 ist in dem Gehäuse 13, 14 die Achse 28 des Öffnungshebels 29 gelagert. Die Achse 28 ist mit einem nockenförmigen Fortsatz 30 versehen, der sich mit seiner Vorderseite auf dem über eine Stufe an die Ausnehmung 27 angeschlossenen geraden Teile 31 der Schenkel des Verriegelungshebels 17 abstützt, die parallel zu dem Stegteil 24 verlaufen.

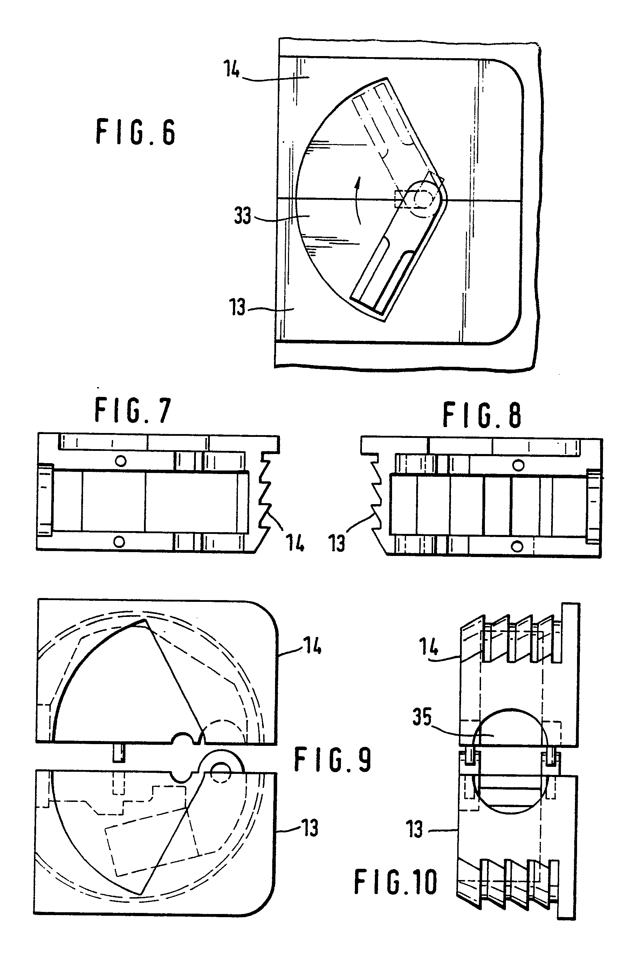

Das Betätigungsteil 32 des Entriegelungshebels 29 ist in der insbesondere aus Fig. 6 ersichtlichen Weise in einer sektorartigen Vertiefung 33 der Oberseite des Gehäuses 13, 14 angeordnet.

Um an eine vertikale Möbelwand beidseits in gleicher Höhe horizontale Möbelteile anschließen zu können, sind in der aus Fig. 5 ersichtlichen Weise von beiden Seiten her in eine Buchse 34, die in eine Durchgangsbohrung eingeschoben ist, mit verbreiterten Köpfen 6 versehene Beschlagteile 1 eingeschraubt. Die Gehäusehälften 13, 14 sind in der aus den Fig. 6 bis 10 ersichtlichen Weise längs einer axialen Mittelebene geteilt, so daß sich das Beschlagteil 2 in einfacher Weise montieren läßt. Zur Verbindung und Zentrierung sind die Gehäuseteile 13, 14 mit Zapfen und entsprechenden Ausnehmungen versehen. Das Gehäuse 13, 14 ist auf seiner Vorderseite abgeflacht und mit einer Eintrittsöffnung 35 für den verbreiterten Kopf 6 versehen.

**Patentansprüche**

1. Verbindungsbeschlag zum lösbaren Verbinden zweier winkelig, vorzugsweise rechtwinkelig, aufeinanderstoßender Möbelteile (3, 4), bestehend aud zwei jeweils an einem der zu verbindenden Möbelteile befestigbaren Beschlagteilen (1, 2), von denen der eine, mit einem zapfenförmigen und mit einem verbreiterten Kopf (6) versehene Teil (1) in eine Ausnehmung (35) des anderen Teils (2) bis zum Anschlag der Beschlagteile und/oder Möbelteile aufeinander einschiebbar ist und der andere Teil zur Verriegelung der Beschlagteile miteinander aus einem schwenkbar gelagerten und von einer Druckfeder (22) beaufschlagten Verriegelungshebel (17) mit hakenförmigem Sperrteil (20) besteht, das auf seiner dem Kopf in dessen Einschubrichtung zugewandten Seite (25) so kurven- oder keilförmig abgeschrägt ist, daß es entgegen der Kraft der Feder bis zum Einschnappen in die Verriegelungsstellung zurückgedrängt wird, wobei eine Einrichtung (29) zum Verschwenken des Verriegelungshebels entgegen der Kraft der Feder in die entriegelte Stellung vorgesehen ist, dadurch gekennzeichnet, daß zum Verbinden der Möbelteile (3, 4) der Verriegelungshebel (17) gegabelt und in einem topfförmigen Gehäuse (13, 14) angeordnet ist, daß die Anordnung des Verriegelungshebels (17) und die Ausgestaltung der den Kopf (6) hintergreifenden Seite (26) des Sperrteils (20) und die hintergriffene Rückseite des Kopfes (6) so vorgenommen sind, daß das Sperrteil (20) unter Keilwirkung selbstspannend an dem Kopf (6) angreift, und daß die Einrichtung (29) zum Verschwenken des Verriegelungshebels (17) diesen in seiner entriegelten Stellung hält.

2. Verbindungsbeschlag nach Anspruch 1, dadurch gekennzeichnet, daß die Rückseite (8) des Kopfes (6) kegelstumpfförmig oder im Querschnitt kurvenförmig ausgebildet ist.

3. Verbindungsbeschlag nach einem der Ansprüche 1 oder 2, dadurch gekennzeichnet, daß der Verriegelungshebel (17) von seinem topfförmigen Gehäuse (13, 14) vollständig umgeben ist und der Gelenkbolzen (16), um den er schwenkbar ist, zu dessen axialer Mittellinie parallel verläuft.

4. Verbindungsbeschlag nach einem der Ansprüche 1 bis 3, dadurch gekennzeichnet, daß der Verriegelungshebel (17) zweiarmig ausgebildet ist und die Feder (22) auf den Arm (21) wirkt, der dem den hakenförmigen Teil (20) tragenden Arm gegenüberliegt.

5. Verbindungsbeschlag nach einem der Ansprüche 1 bis 4, dadurch gekennzeichnet, daß der Verriegelungshebel aus einem Blechstanzteil in der Weise besteht, daß die gabelförmigen Hakenteile (20) als Schenkel U-förmig von einem mittleren Stegteil (24) abgebogen sind.

6. Verbindungsbeschlag nach einem der Ansprüche 1 bis 5, dadurch gekennzeichnet, daß die Einrichtung zum Verschwenken des Verriegelungshebels aus einem im Gehäuse (13, 14) schwenkbar gelagerten Bolzen (28) besteht, der einen an dem Verriegelungshebel (17) angreifenden hebelartigen Nocken (30) und endseitig einen auf der Deckplatte des Gehäuses liegenden Betätigungshebel (32) trägt.

7. Verbindungsbeschlag nach Anspruch 6, dadurch gekennzeichnet, daß der Betätigungshebel (32) in einer sektorförmigen Ausnehmung (33) der Deckplatte des Gehäuses angeordnet ist.

8. Verbindungsbeschlag nach einem der Ansprüche 1 bis 6, dadurch gekennzeichnet, daß das Gehäuse (13, 14) des Verriegelungshebels zylinderförmig mit abgeplatteter Vorderseite, die dem anderen Beschlagteil zugewandt ist und in der sich die dem Durchmesser des Kopfes (6) entsprechende Eintrittsöffnung (35) für diesen befindet, ausgebildet und in einer mittig durch die abgeplattete Vorderseite verlaufenden axialen Mittelebene teilbar ist.

9. Verbindungsbeschlag nach Anspruch 8, dadurch gekennzeichnet, daß eine Gehäusehälfte (13) mit einer nach unten offenen, die Druckfeder (22) seitlich führenden Kammer versehen ist.

## Claims

1. A connecting fixture for detachably connecting two furniture parts (3, 4), which abut at an angle, preferably at right angles, consisting of two fixture parts (1, 2), which are adapted to be respectively secured to the furniture parts to be connected, one of said fixture parts having a pinlike element (1) which has an enlarged head (16) and is adapted to be slidably inserted into an aperture (35) of the other part (2) until the fixture parts and/or furniture parts engage each other, the other part consisting of a pivoted locking lever (17), which is biased by a compression spring (22) and has a hooklike locking portion (20) and serves to interlock the fixture parts, said locking portion having a curved or wedge-shaped taper on its side (25) facing the head in the direction in which it is inserted so that said locking portion will be forced back against the force of the spring until the locking portion snaps to its locking position, and means (29) are provided for pivotally moving the locking lever to its unlocked position against the force of the sping, characterized in that the locking lever (17) for connecting the furniture parts (3, 4) is forked and is disposed in a pot-shaped housing (13, 14), the locking lever (17) is so arranged and that side of the locking portion (20) with which the locking portion extends behind the head (6) and the adjacent rear side of the head (6) are so designed that the locking portion (20) engages the head (6) and is self-biasing owing to a wedge action, and the means (29) for pivotally moving the locking lever (17) hold the latter in its unlocked position.

2. A connecting fixture according to claim 1, characterized in that the rear side (8) of the head (6) is frustroconical or curved in cross-section.

3. A connecting fixture according to any of claims 1 or 2, characterized in that the locking lever (17) is entirely surrounded by its pot-shaped housing (13, 14) and is pivoted on a pivot pin (16), which is parallel to the axial center line of the housing.

4. A connecting fixture according to any of claims 1 to 3, characterized in that the locking lever (17) is two-armed and the spring (22) acts on that arm (21) which is opposite to the arm that carries the hooklike part (20).

5. A connecting fixture according to any of claims 1 to 4, characterized in that the locking lever consists of a sheet metal stamping, in which the forked hook portions (20) constitute legs, which are bent from an intermediate web portion (24) to provide a U-shaped structure.

6. A connecting fixture according to any of claims 1 to 5, characterized in that the means for pivotally moving the locking lever comprise a pin (28), which is pivoted in the housing (13, 14) and carries a leverlike cam (30) acting on the locking lever (17) and at its end carries an actuating lever (32), which lies on the top plate of the housing.

7. A connecting fixture according to claim 6, characterized in that the actuating lever (32) is disposed in a sector-shaped recens (33) of the cover plate of the housing.

8. A connecting fixture according to any of claims 1 to 6, characterized in that the housing (13, 14) for the locking lever has the shape of a cylinder having a flat forward face, which faces the other fixture part and which is formed with an entrance opening (35) for the head (6), which opening corresponds to the head in diameter, and said housing is split in an axial center plane, which extends centrally through the flat forward face.

9. A connecting fixture according to claim 8, characterized in that one housing half (13) is provided with an open-bottomed chamber for laterally guiding the compression spring (22).

**Revendications**

1. Ferrure de jonction pour l'assemblage détachable de deux éléments de meuble (3, 4) se joignant en formant un angle, de préférence un angle droit, consistant en deux pièces de ferrure (1, 2) pouvant être fixée chacune à un des éléments de meuble à raccorder, dont une pièce (1) est pourvue d'une pièce en forme de tenon et d'une tête élargie (6) pouvant être engagée dans une ouverture (35) de l'autre pièce (2) jusqu'à ce que les pièces de ferrure et/ou les éléments de meuble se joignent, l'autre partie servant au verrouillage réciproque des pièces de ferrure consistant en un levier de verrouillage (17) avec pièce de verrouillage en forme de crochet (20) pivotant et poussée par un ressort de pression (22), la pièce de blocage étant chanfreinée à la manière d'une courbe ou d'un coin sur son côté (25) faisant face à la tête et dans le sens de la direction d'insertion de cette dernière, de sorte que la pièce de blocage est refoulée contre la force que la pièce de blocage est refoulée contre la force du ressort jusqu'à ce qu'elle encliquète dans la position de verrouillage, un dispositif (29) étant prévu pour basculer le levier de verrouillage contre la force du ressort dans la position déverrouillée, caractérisée en ce que pour raccorder les éléments de meuble (3, 4) le levier de verrouillage (17) est fourché et disposé dans un boîtier (13, 14) en forme de pot, en ce que la disposition du levier de verrouillage (17) et la configuration du côté (26) de la pièce de blocage (20) s'engageant derrière la tête (6) et la face arrière de la tête (6) dans laquelle s'engage le levier de verrouillage sont conçus de manière à ce que la pièce de blocage (20) s'attaque à la tête (6) sous l'effet d'un point à auto-détente, et que le dispositif (29) pour basculer le levier de verrouillage (17) maintient ce dernier dans sa position déverrouillée.

2. Ferrure de jonction selon la revendication 1 caractérisée en ce que la face arrière (8) de la tête (6) est tronconique ou présente une coupe transversale en forme de courbe.

3. Ferrure de jonction selon la revendication 1 ou 2 caractérisée en ce que le levier de verrouillage (17) est entièrement entouré par son boîtier en forme de pot (13, 14) et en ce que l'axe d'articulation (16) autour duquel il peut être pivoté s'étend parallèlement à sa ligne axiale médiane.

4. Ferrure de jonction selon l'une des revendications 1 à 3 caractérisée en ce que le levier de verrouillage (17) est à deux bras et en ce que le ressort (22) agit sur le bras (21) placé à l'opposé du bras en forme de crochet portant la pièce (20).

5. Ferrure de jonction selon l'une des revendications 1 à 4, caractérisée en ce que le levier de verrouillage consiste en une pièce en tôle estampée de manière à ce que les crochets (20) en forme de fourches soient courbés comme des doigts formant un U à partir d'une traverse médiane.

6. Ferrure de jonction selon l'une des revendications 1 à 5, caractérisée en ce que le dispositif pour basculer le levier de verrouillage consiste en un boulon (28) logé de manière pivotante dans le boîtier (13, 14), et présentant une came (30) ayant la fonction d'un levier s'engageant dans le levier de verrouillage (17) et de plus en son extrémité un levier d'actionnement se trouvant sur le couvercle du boîtier.

7. Ferrure de jonction selon la revendication 6 caractérisée en ce que le levier d'actionnement (32) est disposé dans une échancrure (33) en forme de secteur du couvercle du boîtier.

8. Ferrure de jonction selon l'une des revendications 1 à 6 caractérisée en ce que le boîtier (13, 14) du levier de verrouillage a une forme de cylindre à face avant aplatie qui fait face à l'autre pièce de ferrure et dans laquelle l'ouverture d'entrée (35) correspondant au diamètre de la tête (6) est pratiquée et en ce que le boîtier peut être subdivisé au centre par un plan central axial s'étendant à travers la face avant aplatie.

9. Ferrure de jonction selon revendication 8 caractérisée en ce qu'une moitié de boîtier (13) comporte une chambre ouverte vers le bas qui est prévue pour le guidage latéral du ressort de pression (22).

# FIG.1

# FIG.2

FIG.3

FIG.4

FIG.5

**FIG.6**

14

33

13

**FIG.7**

14

**FIG.8**

13

14

**FIG.9**

13

14

35

13

**FIG.10**